# EUROPEAN PATENT APPLICATION

(11) **EP 2 957 750 A1**
(43) Date of publication of application: **23.12.2015**
(21) Application number: 14172576.2
(22) Date of filing: 16.06.2014
(51) Int. Cl.: F02D 35/02, F02D 41/00, F02P 5/153, G01L 23/22, F02D 19/06

(54) **Method for controlling an internal combustion engine**

(71) Applicant: Caterpillar Motoren GmbH & Co. KG, 24159 Kiel (DE)
(72) Inventor: SixelL, Eike Joachim, 24109 Kiel (DE); Holst, Hauke, 24161 Altenholz (DE)
(74) Representative: Kramer Barske Schmidtchen Patentanwälte PartG mbB

(57) **Abstract**

The present disclosure relates to a method for controlling a reciprocating internal combustion engine (100) operating at least partly on gaseous fuel. The method may comprise receiving (step 402) a pressure data set of a combustion event. The method may further comprise deriving an actual combustion duration (step 420) of the combustion event from the received pressure data set, and determining (step 428) that the derived combustion duration of the combustion event is shorter than a preset combustion duration. The method may further comprise providing a control signal (step 440) to adapt an operation of the internal combustion engine (100).

## Description

### Technical Field

The present disclosure relates to a method for controlling a reciprocating internal combustion engine, a control system configured to perform said method, and a reciprocating internal combustion engine including said control system.

### Background

Combustion processes in reciprocating internal combustion engines may suffer of various phenomenons resulting in decreased power outputs, increased wear and/or minor and major damages of the internal combustion engine. Examples of said phenomenons include pre-ignition events and knocking events (also referred to as detonation and post-ignition). In pre-ignition and knocking events, at least one second flame front is generated in the combustion chamber either before or after a desired ignition caused by an ignition system of the internal combustion engine. The second flame front may be generated in the combustion chamber due to self-ignition caused by, for example, thermal hot spots and excessive compression. A first flame front originating from the desired ignition and the at least one second flame front may even collide in the combustion chamber. As a result, excessive temperatures and cylinder pressures may be generated.

A further phenomenon that may occur in a combustion process is a sudden and undesired increase in combustion velocity. A sudden increase in combustion velocity may occur in advance of and may lead to knocking events. The phenomenon of increased combustion velocity may particularly occur in high load operations of reciprocating internal combustion engines running on gaseous fuel such as Otto-Gas-engines, Diesel-Gas-engines, and Dual-fuel engines (DF engine).

A problem resulting from the increased combustion velocity is that a majority of fuel is combusted while a piston is still close to a top dead center (TDC) during travel to a bottom dead center (BDC). The released heat resulting in an expansion of the combustion gases combined with the limited space due to the position of the piston close to TDC may result in high cylinder pressures, which may damage the affected cylinder.

The present disclosure is directed, at least in part, to improving or overcoming one or more aspects of prior systems.

### Summary of the Disclosure

In an aspect of the present disclosure, a method for controlling a reciprocating internal combustion engine operating at least partly on gaseous fuel is disclosed. The method may comprise receiving a pressure data set of a combustion event, the pressure data set corresponding to a temporal development of a cylinder pressure during the combustion event. The method may further comprise determining that the received pressure data set indicates an actual ignition timing within a preset ignition timing window. Still further, the method may comprise deriving an actual combustion duration of the combustion event from the received pressure data set, and determining that the derived combustion duration of the combustion event is shorter than a preset combustion duration. The method may further comprise providing a control signal to adapt an operation of the internal combustion engine.

For example, providing the control signal may comprise reducing a load of a cylinder associated with the determination that an actual combustion duration is shorter than a preset combustion duration. As a further example, providing the control signal may comprise delaying a desired ignition timing of a cylinder associated with the determination that an actual combustion duration is shorter than a preset combustion duration.

In another aspect of the present disclosure, a control system for an internal combustion engine is disclosed. The control system may comprise a pressure sensor configured to measure a temporal development of the cylinder pressure, and a control unit connected to the pressure sensor and configured to perform the method as exemplary disclosed herein.

In yet another aspect of the present disclosure, a reciprocating internal combustion engine operating at least partly on gaseous fuel is disclosed. The reciprocating internal combustion engine may comprise the control system as exemplary disclosed herein.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic drawing of an exemplary internal combustion engine operable at least partly on gaseous fuel;
Fig. 2 shows a schematic cross-sectional view of a cylinder of a DF internal combustion engine;
Fig. 3 shows a schematic cross-sectional view of a cylinder of a gaseous fuel internal combustion;
Fig. 4 shows a flow diagram of an exemplary method for controlling an internal combustion engine;
Fig. 5 shows an exemplary time-pressure diagram of the cylinder pressure during various operation conditions of an internal combustion engine; and
Fig. 6 shows a time-combustion energy diagram that may be used to identify a combustion duration of a combustion event.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that a control strategy for an internal combustion engine may include a determination if a suddenly increased combustion velocity occurs. To reliably determine a too fast combustion and to differentiate the same from other phenomenons that may occur during combustion, a determination that a combustion event to be evaluated is free of any pre-ignition event and/or any knocking event may be required. Such a differentiation allows a phenomenon-specific control of the internal combustion engine in case one of the monitored phenomenons occurs. In particular, the present disclosure focusses on control steps that may be carried out if it is determined that a suddenly increased combustion velocity occurred in an evaluated combustion event.

The present disclosure is further based in part on the realization that deriving a combustion duration in a robust and reliable manner may be achieved by evaluating a temporal development of a cylinder pressure during a combustion event. Specifically, a detour via a determination of a temporal development of a combustion energy derived from the temporal development of the cylinder pressure may allow detecting the combustion duration with a resolution required to reliably evaluate the combustion event. Particularly, it was found that the above noted detour readily allows to associate combustion events with increased combustion velocities at an early stage. That may allow applying countermeasures quite quickly, which leads to a highly responsive control system.

Still further, the present disclosure is based in part on the realization that in case a combustion event is associated with increased combustion velocity, control of the internal combustion engine to return to a normal operation of the affected cylinder may include delaying an ignition timing and/or reducing a load of the affected cylinder. The herein disclosed control steps may also benefit from the evaluation of the combustion event as disclosed herein to produce synergic effects. For example, based on the above noted high resolution of the detected combustion durations, it may be possible to calculate a deviation between a combustion event to be corrected and a desired preset combustion duration. That deviation may be utilized as an input to select and adapt countermeasures to control the internal combustion engine in an improved manner. In this way, the countermeasures performed may be merely minimally invasive.. However, the internal combustion engine may also be brought back to normal operation without any external influence. Nevertheless, in this case, monitoring of the combustion events is particularly important.

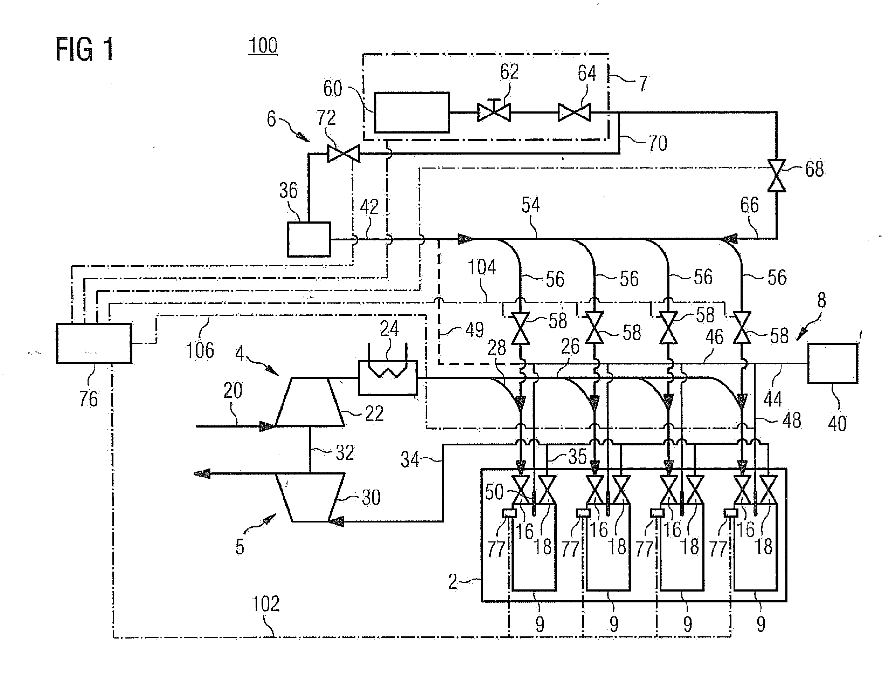

An internal combustion engine operable at least partly on gaseous fuel and exemplary methods for controlling the same are described in the following in connection with Figs. 1 to 3 and Figs. 4 to 6, respectively.

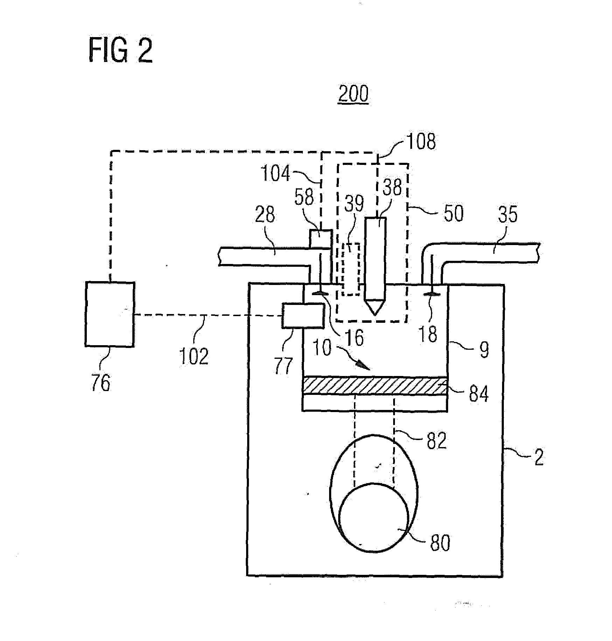

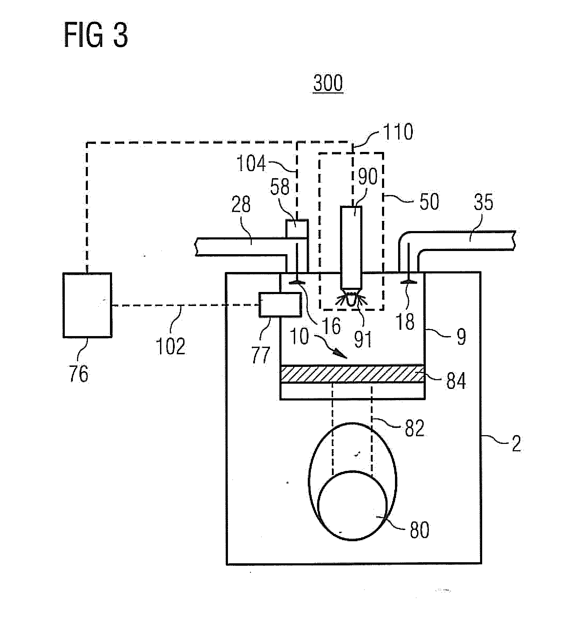

Fig. 1 shows schematically an exemplary internal combustion engine 100 operating at least partly on gaseous fuel, such as a DF engine (illustrated schematically in Fig. 2) or a gaseous fuel engine (illustrated schematically in Fig. 3).

Internal combustion engine 100 comprises an engine block 2, a charge air system 4, an exhaust gas system 5, a gaseous fuel system 6 including a purge gas system 7 and/or a liquid fuel system 8. Internal combustion engine 100 can be powered with a liquid fuel such as, for example, diesel fuel in a liquid fuel mode (LFM), and with a gaseous fuel such as natural gas provided, for example, by an LNG-system, in a gaseous fuel mode (GFM).

Engine block 2 comprises a plurality of cylinders. Exemplarily, four cylinders 9 are depicted in Fig. 1. Engine block 2 may be of any size, with any number of cylinders, such as 6, 8, 12, 16 or 20, and in any configuration, for example, "V", in-line or radial configuration.

Each cylinder 9 is equipped with at least one inlet valve 16 and at least one outlet valve 18. Inlet valves 16 are fluidly connected to charge air system 4 and configured to provide charge air, or a mixture of charge air and gaseous fuel into cylinders 9. Analogous, outlet valves 18 are fluidly connected to exhaust gas system 5 and configured to direct exhaust gas out of respective cylinder 9.

Charge air is provided by charge air system 4 including an air intake 20, a compressor 22 to charge air, and a charge air cooler 24. A charge air manifold 26 is fluidly connected downstream of charge air cooler 24 and guides charge air via cylinder specific inlet channels 28 into respective cylinders 9.

Exhaust gas system 5 includes an exhaust gas turbine 30 connected to compressor 22 via shaft 32 and an exhaust gas manifold 34 guiding exhaust gas from individual exhaust gas outlet channels 35 to exhaust gas turbine 30.

Charge air system 4 may comprise one or more charge air manifolds 26. Similarly, exhaust gas system 5 may comprise one or more exhaust gas manifolds 34.

In addition, inlet valves 16 and outlet valves 18 may be installed within inlet channels 28 and outlet channels 35, respectively. Inlet channels 28 as well as outlet channels 35 may be provided within a common cylinder head or individual cylinder heads covering cylinders 9.

Gaseous fuel system 6 comprises a gaseous fuel source 36 connected to gaseous fuel piping 42. Gaseous fuel source 36 constitutes a gaseous fuel feed for supplying gaseous fuel for combustion in GFM. For example, gaseous fuel source 36 comprises a gas valve unit and a gaseous fuel tank that contains natural gas in a pressurized state.

Gas valve unit is configured to allow, to block, and to control flow from gaseous fuel tank into gaseous fuel piping 42. The gas valve unit may comprise gaseous fuel control valves, gaseous fuel shut-off valves and venting valves.

Gaseous fuel piping 42 is fluidly connected to a gaseous fuel manifold 54 which splits into a plurality of gaseous fuel channels 56. Each gaseous fuel channel 56 is fluidly connected to one of the plurality of inlet channels 28. To dose gaseous fuel into individual inlet channels 28, in each gaseous fuel channel 56, a gaseous fuel admission valve 58 is installed. In some embodiments, internal combustion engine 100 may comprise more than one gaseous fuel manifold 54.

Each gaseous fuel admission valve 58 is configured to allow or to block flow of gaseous fuel into an individual inlet channel 28 to mix with compressed charge air from charge air system 4 in GFM. Thus, cylinder specific mixing zones downstream of each gaseous fuel admission valve 58 are generated. For example, gaseous fuel admission valves 58 may be solenoid actuated plate valves in which springs hold a lower surface of a movable disk against an upper surface of a stationary disk or plate, the two surfaces being configured to provide a sealed relationship in a closed state of gaseous fuel admission valve 58. Each gaseous fuel admission valve 58 may be mounted to a cylinder head covering at least one cylinder 9.

Purge gas system 7 (indicated in Fig. 1 by a dashed dotted box) comprises a purge gas tank 60, a purge gas control valve 62, and a purge gas shut-off valve 64 connected in series. Purge gas tank 60 constitutes a purge gas source to flush gaseous fuel piping 42, gaseous fuel manifold 54, etc. with a purge gas, such as nitrogen in a pressurized state.

Purge gas system 7 may be fluidly connected to gaseous fuel system 6 at various locations. For example, in Fig. 1 a first connection 66 is disposed proximal to the gaseous fuel manifold 54. A second connection 70 is disposed proximal to gaseous fuel source 36. First shut-off valve 68 and second shut-off valve 72 can block or allow a purge gas flow through first connection 66 and second connection 70, respectively. Additional connections may be integrated in gas valve unit of gaseous fuel source 36.

As previously mentioned, Fig. 1 illustrates a DF internal combustion engine as well as a gaseous fuel engine. In a DF internal combustion engine, liquid fuel system 8 comprises a liquid fuel tank 40 connected to liquid fuel piping 44. Liquid fuel tank 40 may comprise a first liquid fuel tank for storing a first liquid fuel, for example, heavy fuel oil (HFO), and a second liquid fuel tank for storing a second liquid fuel, for example, diesel fuel. Liquid fuel tank 40 constitutes a liquid fuel source for supplying liquid fuel for combustion in LFM. Additionally, liquid fuel tank 40 may constitute a liquid fuel source for supplying ignition fuel in GFM.

Liquid fuel piping 44 is fluidly connected to a liquid fuel manifold 46 which splits into a plurality of liquid fuel inlet channels 48. To dose liquid fuel into the combustion chamber of cylinder 9, in each liquid fuel inlet channel 48 a fuel injection system 50 is installed.

In a gaseous fuel internal combustion engine, such as a spark ignited gaseous fuel internal combustion system, fuel injection system 50 is fluidly connected to gaseous fuel source 36 (indicated by a dashed line 49) instead of liquid fuel tank 40. In this embodiment fuel injection system 50 may comprise a pre-combustion chamber for providing spark ignited pilot flames 91 (see Fig. 3) to ignite the mixture of gaseous fuel and air.

Exemplary embodiments of fuel injection system 50 for DF and gaseous fuel internal combustion engines are described in more detail when referring to Figs. 2 and 3, respectively.

As shown in Fig. 1, internal combustion engine 100 further comprises a plurality of pressure sensors 77 mounted at each cylinder 9. Each pressure sensor 77 is configured to generate a signal corresponding to a temporal development of an internal cylinder pressure during the operation of the engine, for example, during combustion. The pressure sensor is further described when referring to Fig. 2.

To control operation of engine 100, a control unit 76 is provided. Control unit 76 forms part of a control system of the engine. Control unit 76 is configured to receive data of pressure sensor 77 via a readout connection line 102. Control unit 76 may further be configured to control various components of engine 100 such as gaseous fuel admission valves 58 via a control connection line 104 and fuel injection system 50 via a control connection line 106. Control unit 76 may further be configured to control valves of purge gas system 7. Alternatively, a second control unit (not shown) may be configured to control the operation of engine 100. Further description of the control system and additional control lines between control unit 76 and other components of the engine, such as the fuel injection system 50, will be given in Figs. 2 and 3.

Control unit 76 may further be connected to other sensors not shown in Fig. 1, such as engine load sensors, engine speed sensors, temperature sensors, NOx-sensors, or fuel-to-air ratio sensors provided for each individual cylinder or for a plurality of cylinders. Control unit 76 may also be connected to an operator panel (not shown) for issuing a warning to the operator, indicating a failure of the engine or the like.

Fig. 2 shows a cylinder 9 of a DF internal combustion engine 200 which is an exemplary embodiment of internal combustion engine 100 of Fig. 1. Elements already described in connection with Fig. 1 have the same reference numerals, such as engine block 2, control unit 76, pressure sensor 77, and cylinder 9.

Cylinder 9 provides at least one combustion chamber 10 for combusting a mixture of gaseous fuel and air, a piston 84, and a crankshaft 80 which is drivingly connected to piston 84 via a piston rod 82. Piston 84 is configured to reciprocate within cylinder 9.

Cylinder 9 is connected to charge air manifold 26 via inlet channel 28 and to exhaust gas manifold 34 via outlet channel 35 (see Fig. 1). Inlet valve 16 is disposed in inlet channel 28, and outlet valve 18 is disposed in outlet channel 35. Gaseous fuel admission valve 58 can supply gaseous fuel to combustion chamber 10 of cylinder 9.

Fig. 2 further illustrates fuel injection system 50 by a dashed box. When DF internal combustion engine 200 is operated in LFM, fuel injection system 50 is used to inject liquid fuel into combustion chamber 10, the liquid fuel being the sole source of energy. When DF internal combustion engine 200 is operated in GFM, fuel injection system 50 may be used to inject a pilot amount of liquid fuel into combustion chamber 10 to ignite the mixture of gaseous fuel and air. In GFM, fuel injection system 50 may therefore function as a gaseous fuel ignition system.

In Fig. 2, an exemplary embodiment of such a gaseous fuel ignition system is based on a main liquid fuel injector 38 for injecting a large amount of liquid fuel in LFM and a pilot amount of liquid fuel into combustion chamber 10 to ignite the mixture of gaseous fuel and air in GFM. In other embodiments, such as for heavy duty DF internal combustion engines, gaseous fuel ignition system may comprise a separate ignition liquid fuel injector 39 to inject the pilot amount of liquid fuel into combustion chamber 10 in GFM.

Cylinder 9 further comprises pressure sensor 77 to measure a temporal development of an internal cylinder pressure during the operation of the engine, for example, during combustion. Pressure sensor 77 may be a capacitive pressure sensor, an electromagnetic pressure sensor, a piezoelectric pressure sensor, an optical pressure sensor or any other pressure sensor known in the art. Pressure sensor 77 may be mounted at any location of cylinder 9 convenient for measuring the cylinder pressure during combustion. For example, pressure sensor 77 may be mounted within a cylinder side wall or at the cylinder head face. Pressure sensor 77 may reach at least partly into the combustion chamber of cylinder 9, for example through a bore in a cylinder side wall.

Pressure sensor 77 may further be disposed outside of the combustion chamber 10 to detect the cylinder pressure indirectly. For example, pressure sensor 77 may be mounted at an existing component of the engine, such as a bolt head, spark plug boss, etc. Pressure sensor 77 may sense stress of that component during combustion, the stress corresponding to the internal cylinder pressure during combustion.

DF internal combustion engine 200 additionally comprises a control system including control unit 76. Control unit 76 is connected to main liquid fuel injector 38 via control connection line 108 and, in case of heavy duty DF internal combustion engines, also to ignition liquid fuel injector 39 via a separate control connection line (not shown).

Fig. 3 shows a cylinder 9 of a gaseous fuel internal combustion engine 300 being another exemplary embodiment of internal combustion engine 100 of Fig. 1. Elements already described in connection with Figs. 1 and 2 have the same reference numerals. Gaseous fuel internal combustion engine 300 is similar to DF internal combustion engine 200 of Fig. 2, except for the components described in the following.

Fuel injection system 50 comprises a pre-combustion chamber 90. Pre-combustion chamber is configured to receive a pre-mixture of gaseous fuel and air outside of combustion chamber 10. The pre-mixture of gaseous fuel and air is ignited, for example by a spark plug, to provide pilot flames 91 disposed into combustion chamber 10. Pilot flames 91 are used to ignite the mixture of gaseous fuel and air in combustion chamber 10. Control unit 76 is connected to pre-combustion chamber 90 via control connection line 110. Alternatively, fuel injection system 50 may be a spark plug for igniting the mixture of gaseous fuel and air via an electric discharge.

In general, control unit 76 of an engine as disclosed in connection with Figs. 1 to 3 may be a single microprocessor or multiple microprocessors that include means for controlling, among others, an operation of various components of DF internal combustion engine 200. Control unit 76 may be a general engine control unit (ECU) capable of controlling numerous functions associated with DF internal combustion engine 200 and/or its associated components. Control unit 76 may include all components required to run an application such as, for example, a memory, a secondary storage device, and a processor such as a central processing unit or any other means known in the art for controlling DF internal combustion engine 200 and its components. Various other known circuits may be associated with control unit 76, including power supply circuitry, signal conditioning circuitry, communication circuitry and other appropriate circuitry. Control unit 76 may analyze and compare received and stored data and, based on instructions and data stored in memory or input by a user, determine whether action is required. For example, control unit 76 may compare received pressure data from pressure sensor 77 with target values stored in memory, and, based on the results of the comparison, transmit signals to one or more components of the engine to alter the operation of the same.

### Industrial Applicability

Exemplary internal combustion engines suited to the disclosed method are, for example, DF internal combustion engines of the series M46DF and M34DF or gaseous fuel internal combustion engines of the series GCM34 manufactured by Caterpillar Motoren GmbH & Co. KG, Kiel, Germany. One skilled in the art would appreciate, however, that the disclosed method can be adapted to suit other internal combustion engines as well.

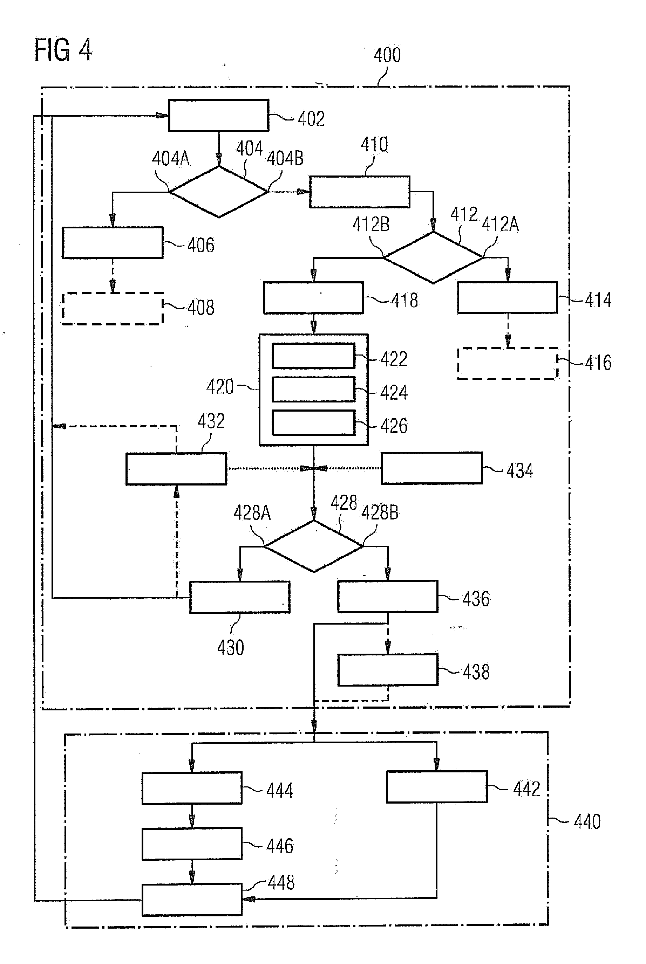

In the following, operation and control of internal combustion engine 100 is described with reference to Figs. 1 to 3 in connection with Figs. 4 to 6. For illustration purposes, the method is disclosed with reference to structural elements disclosed in connection with Figs. 1 to 3. However, the skilled person will understand that the respective steps can be performed on other embodiments as well.

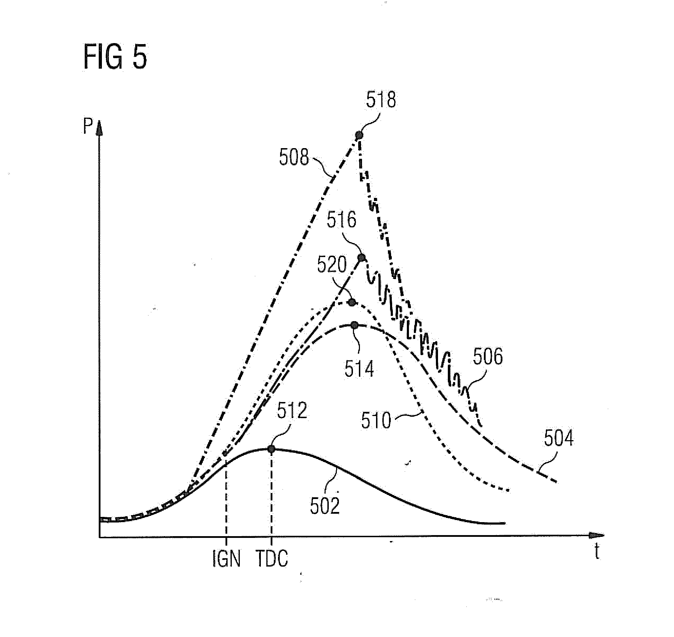

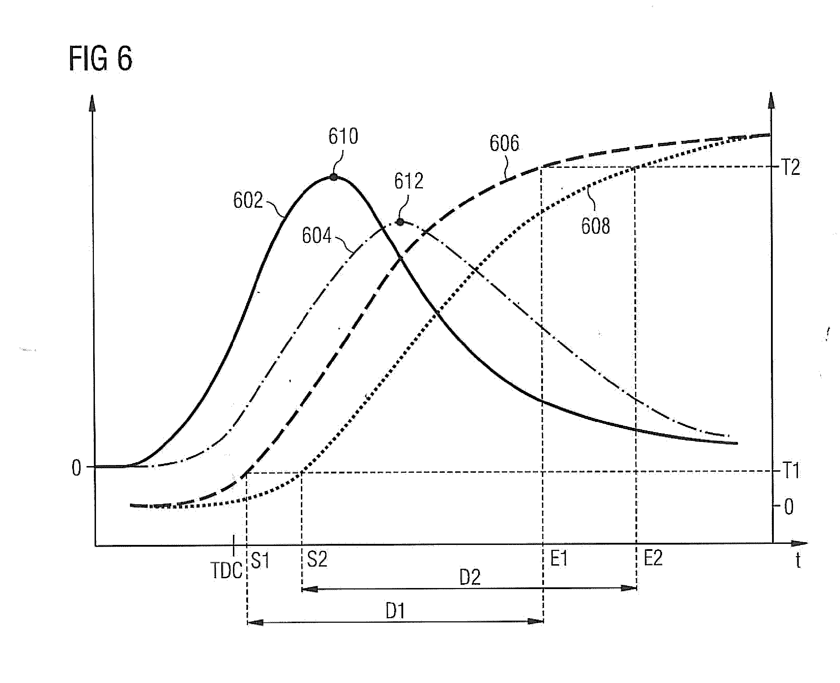

Fig. 4 depicts a flow chart of the control method. Particular methods steps included in the flow chart of Fig. 4 are described with reference to Figs. 5 and 6. Specifically, Fig. 5 shows a plurality of temporal developments of a cylinder pressure during different combustion events. Further, Fig. 6 shows a graph for describing an extraction of a combustion duration that may be performed by control unit 76.

Before referring in detail to the control method shown in Fig. 4, the diagram of Fig. 5 is described in the following. Generally, in Fig. 5, five temporal pressure developments are indicated by graphs 502, 504, 506, 508, and 510.

Graph 502 (indicated by a solid line in Fig. 5) indicates a motored operation of internal combustion engine 100. In motored operation, no combustion occurs. As can be seen in Fig. 5, graph 502 illustrates an increase of pressure up to a certain maximum compression pressure 512, followed by a decay of pressure back to the initial pressure. The increase of pressure up to maximum compression pressure 512, for example about 100 bar, corresponds to the compression of charge air only or an unignited fuel-air mixture during the upward movement of piston 84 in cylinder 9. When piston 84 reaches top dead center (TDC), the pressure approaches its maximum value. Time-pressure graph 502 can be measured or derived from the compression of the gaseous fuel-air mixture within cylinder 9 based on thermodynamic equations, such as equations for adiabatic compression or polytrophic compression or can be provided as an estimate or simulation. Control unit 76 may have stored a temporal development of cylinder pressure for motored operation of the internal combustion engine, such as graph 502.

Further, graph 504 (indicated by a dashed line in Fig. 5) represents a temporal pressure development of a combustion event during normal operation. Compared to the motored operation illustrated by graph 502, the heat release of the combustion causes the cylinder pressure to increase up to a maximum combustion pressure 514 far above maximum compression pressure 512 of motored operation. Additionally, peak pressure occurs at times later than TDC due to the finite combustion time. An example value for the maximum combustion pressure 514 may be 180 bar.

Moreover, in Fig. 5, graph 506 (indicated by a dashed-dotted line in Fig. 5) indicates a combustion event, in which knocking occurs. Initially, the pressure increases quite similar to graph 504. Subsequently after reaching a maximum pressure at 516, the pressure decreases with fluctuations.

Still further, graph 508 (indicated by a double-dashed-dotted line in Fig. 5) represents a pre-ignition combustion event. Compared to the other graphs 502, 504, 506, and 510, an initial pressure increase starts earlier. Specifically, the pressure increase of graph 508 starts before a desired ignition timing (referred to as IGN in Fig. 5) of an associated ignition device of cylinder 9. Again, the pressure may decrease with fluctuations after reaching a maximum value 518.

Finally, graph 510 (indicated by a dotted line in Fig. 5) indicates a temporal pressure development that represents a combustion event with an increased combustion velocity. As can be seen in comparison to knocking events (see graph 508), graph 510 does not include pressure fluctuations. Further, a maximum pressure 514 of graph 510 may be lower than maximum pressures 516 and 518 of the combustion with knocking shown in graph 506 and the combustion with pre-ignition shown in graph 508, respectively.

Now referring to Fig. 4, the control method comprises an analysis section 400 and a control section 440. In analysis section 400, method steps for, inter alia, determining if a to be corrected combustion occurs are performed, for example by control unit 76. Subsequently, in case a combustion event is associated with a to be corrected combustion in analysis section 400, method steps for controlling internal combustion engine 100 may be carried out in control section 440, for example, again, by control unit 76.

Referring to analysis section 400, at method step 402, control unit 76 may receive a pressure data set from pressure sensor 77 via readout line 102. That pressure data set corresponds to a temporal development of a cylinder pressure during the combustion event to be evaluated, for example over time or crank angle as depicted in Fig. 5. The pressure data may be available for discrete times during the combustion event, for example at intervals of 0.1° crank angle, or quasi-continuously depending on the temporal resolution of pressure sensor 77.

At step 404, control unit 76 determines if the received pressure data set indicates an actual ignition timing within a preset ignition timing window. For example, said determination may assist in determining if a pre-ignition event occurred. For performing step 404, the actual ignition timing of the to be evaluated combustion event and the ignition timing window are required.

Control unit 76 may derive said actual ignition timing from the received pressure data set by assessing the timing of an initial pressure increase relative to motored operation (see graph 502 in Fig. 5). As said initial pressure increase results from heat release due to combustion, a conclusion on a respective ignition timing may be possible. For example, as can be seen in Fig. 5, graph 508 has a considerable early pressure increase relative to motored operation indicated by graph 502. Thus, control unit 76 determines an actual ignition timing before desired ignition timing IGN. On the other hand, graph 504 indicative of a normal combustion, graph 506 indicative of a combustion with knocking, and graph 510 indicative of a combustion with increased combustion velocity have a similar timing of an initial pressure increase relative to motored operation (see graph 502). That initial pressure increases indicate respective actual ignition timings matching with desired ignition timing IGN.

Further, the ignition timing window is set to include a range around desired ignition timing IGN (see Fig. 5) to allow for tolerances, which may result from, for example, measuring inaccuracies and/or delays inherent to a respective ignition mechanism of engine 100. For instance, the ignition timing window may reach from desired ignition timing IGN until TDC.

If a received pressure data set indicates an actual ignition timing outside of the preset ignition timing window at 404A (see Fig. 4), the combustion event may be associated with a pre-ignition event in step 406. Then, subsequent analysis and control steps may be performed to react on such a determination as is schematically indicated by dashed box 408 in Fig. 4. Alternatively, if the received pressure data set indicates that the actual ignition timing is within the preset ignition timing window at 404B, the respective pressure data set is passed on to step 408 for further analysis. Step 408 may include an association of the respective combustion event as being free of any pre-ignition.

In step 412, which may follow step 410, control unit 76 determines if the received pressure data set indicates an actual pressure fluctuation within a preset pressure fluctuation. For example, said determination may assist in determining if knocking occurred in the combustion event. To perform said determination, an actual pressure fluctuation and a preset pressure fluctuation are required.

Control unit 76 may derive an actual pressure fluctuation from the received pressure data set in a section that starts after a respective maximum pressure 514 516, 518, and 520 (see Fig. 5) of a respective pressure graph. For example, as can be seen in Fig. 5, graphs 506 and 508 include considerable pressure fluctuations, whereas graphs 504 and 510 are substantially free of pressure fluctuations.

To cope with measuring inconsistencies etc., the preset fluctuation range may allow minor fluctuations, for example within a range of up to 2 bar.

In case the received pressure data set indicates the actual pressure fluctuation as exceeding the preset pressure fluctuation range at 412A (see Fig. 4), the combustion event may be associated with a knocking event in step 414. Then, subsequent analysis and control steps may be performed to react on such a determination as is schematically indicated by dashed box 416 in Fig. 4. Alternatively, if control unit 76 determines that the derived actual pressure fluctuation is within the preset pressure fluctuation range at 412B, the respective pressure data set is passed on to step 418 for further analysis. Here, an association of the respective combustion event as being free of knocking may be made.

In step 420, control unit 76 may derive an actual combustion duration from the received pressure data set as is described in the following particularly with reference to Fig. 6. In the exemplary method, step 420 includes three sub steps 422, 424, and 426. Alternative or additional steps may be performed to derive an actual combustion duration.

In Fig. 6, exemplary combustion energy developments over time / crank angle for two operating conditions are each shown in a relative combustion energy development (indicated by graphs 602 and 604) and in an absolute (accumulated) combustion energy development (indicated by graphs 606 and 608). It is noted that a zero point for graphs 602 and 604 is indicated on a left ordinate in Fig. 6, and a zero point for graphs 606 and 608 is indicated on a right ordinate in Fig. 6. Both zero points are spaced apart in direction of the ordinates to increase the visibility of the individual graph developments.

For example, a parameter indicative of a relative combustion energy value may be a so called mass fraction burned (expressed in percent pro crank angle/time), and a parameter indicative of an accumulated combustion energy value may be an integral of the mass fraction burned.

At step 422, control unit 76 derives a relative combustion energy development for the combustion event such as exemplary indicated by graphs 602 and 604. The relative combustion energy development may be derived from a pressure difference between pressure data associated with the combustion event to be evaluated, for example graph 510 in Fig. 5, and pressure data associated with motored operation of engine 100 such as graph 502 in Fig. 5. Alternatively, a relative combustion energy development may be derived as a heat release rate of the combustion, for example, by multiplying the received pressure data with the corresponding combustion chamber volume using respective equations.

For the sake of the present disclosure, graph 602 (indicated by a solid line in Fig. 6) is considered as a relative combustion energy development of a combustion event including an increased combustion velocity such as the one indicated by graph 510 in Fig. 5. On the other hand, graph 604 (indicated by a dashed-dotted line in Fig. 6) is considered to represent a relative combustion energy development of a normal combustion event such as the one represented by graph 504 in Fig. 5. Both graphs 602 and 604 indicate that a temporal development of a relative combustion energy increases until a respective maximum value 610, 612 situated more or less proximal to TDC. At maxima 610 and 612, a greatest relative fuel amount per crank angle is combusted. Although maximum value 610 of graph 602 is greater than maximum value 612 of graph 604, the difference between maximum values 610 and 612 may be overemphasized for illustration purposes, or may be not present at all. Subsequently, in both graphs 602 and 604, the relative combustion energy decreases steadily as the remaining fuel to be combusted gets fewer and fewer.

At step 424 (see Fig. 4), control unit 76 determines a temporal development of an accumulated combustion energy of the combustion event based on the relative combustion energy development determined at step 422, and, thus, based on the pressure data received at step 402. Specifically, graph 606 (indicated by a dashed line in Fig. 6) indicates a development of the accumulated combustion energy over crank angle resulting from the relative combustion energy per crank angle indicated by graph 602. The same applies, mutatis mutandis, for graph 608 (indicated by a dotted line in Fig. 6) relative to graph 604.

As can be seen in Fig. 6, developments of accumulated combustion energies indicated by graphs 606 and 608 may increase exponentially in the beginning followed by a quasi linear increase in a middle section. Subsequently, the increase in the accumulated combustion energy flattens-off asymptotically. In case the accumulated combustion energy would be considered in relation to a maximum available combustion energy provided by the fuel amount in combustion chamber 10, said relationship may increase in accordance with graphs 606 and 608 until about 95 % as the fuel amount is typically not entirely combusted in field applications.

Based on the accumulated combustion energy graphs 606 and 608, combustion durations D1 and D2, respectively, may be identified by control unit 76 at step 426. Specifically, each combustion duration D1 and D2 extends along a section of the time axis (abscissa) between a starting point S1 and S2, and an end point E1 and E2, respectively. Starting points S1 and S2 may correspond to respective accumulated combustion energy values at certain preset thresholds such as exemplary indicated by lower threshold value T1 for starting points S1 and S2, and upper threshold value T2 for end points E1 and E2.

To better cope with measurement uncertainties, and thus more robust evaluations, T1 may be proximal to, but not identical with, 0 % of the accumulated combustion energy. Based on the same considerations, threshold value T2 may be proximal to, but not identical with, a maximum accumulated combustion energy. For example, starting point S1 and S2 may be at a time corresponding to an accumulated combustion energy within a range between 5 % and 15 % of a maximum accumulated combustion energy, particularly 10 % of the maximum accumulated combustion energy. Likewise, end points E1 and E2 may be at a time corresponding to an accumulated combustion energy within a range between 80 % and 95 % of the maximum accumulated combustion energy, particularly 90 % of the maximum accumulated combustion energy.

As noted above, combustions durations D1 and D2 are derivable for control unit 76 as extending between respective start points S1, S2 and end points E1, E2. Combustion durations D1 and D2 may be expressed in terms of a timespan or a crank angle interval.

Referring again to Fig. 4, at step 428, control unit 76 determines if derived combustion duration D1 is shorter than a preset combustion duration, for example combustion duration D2.

In case control unit 76 determines at step 428B that combustion duration D1 of the combustion event to be evaluated is shorted than a preset combustion duration representative for a normal combustion event, control unit 76 associates the evaluated combustion event with an increased combustion velocity at step 436. Exemplary assuming that combustion duration D2 in Fig. 6 would be the preset combustion duration, combustion duration D1 would be determined to be shorter than combustion duration D2, and would thus be associated with an increased combustion velocity.

On the other hand, assuming that control unit 76 determines at step 428A that combustion duration D1 is not shorter (equal to or greater than) than combustion duration D2, control unit 76 associates the evaluated combustion event with a normal combustion duration at step 430. That may further indicate a normal operation of internal combustion engine 100. Originating from step 430, the method may loop back to method step 402 as indicated in Fig. 4.

For example, the preset combustion duration may be set based on a predefined characteristic map as indicated by step 434. The predefined characteristic map may be stored in a memory of control unit 76, and may include a plurality of preset combustion durations determined in specific engine tests including all kinds of conceivable conditions, and/or may be based on empiric data. Additionally or alternatively, the preset combustion duration may be set based on a detected sequence of preceding combustion durations as indicated by step 432. As a predefined characteristic map may include several input parameters such as engine speed, load, charge air pressure, etc., it was found that complexity of the control system may be reduced if evaluation of a combustion duration is based on a comparison to combustion durations of a sequence of preceding combustion events.

For example, combustion duration D1 may be compared to a mean value of a sequence of preceding combustion durations of combustion events being associated with normal combustion velocities. For instance, the sequence may include between 5 and 100, particularly between 10 and 50 combustion durations of preceding combustion events.

In case the preset combustion duration is set at least in part based on a sequence of preceding combustion events associated with normal combustion velocities, the sequence may be continuously updated at step 432 each time a combustion event to be evaluated is associated with normal combustion velocity.

If control unit 76 associates the evaluated combustion duration with an increased combustion velocity at step 436, control unit 76 may additionally calculate a deviation between the evaluated combustion duration and the preset combustion duration at step 438. Said deviation may be expressed in relative values, for example in percentages, or absolute values, for instance in milliseconds or a crank angle interval.

As shown in Fig. 4, the method may transition from analysis section 400 to control section 440 if a combustion event is associated with an increased combustion velocity at step 436. In control section 440, a control signal may be provided to adapt operation of internal combustion engine 100 for returning a combustion process in affected cylinder 9 to a combustion process with normal combustion velocity.

In control step 442, control unit 76 may adapt an ignition timing, for example of ignition fuel injector 38 of cylinder 9, which is associated with the increased combustion velocity. Specifically, the ignition timing may be delayed within a range between 0.1° crank angle (CA) and 2°CA.

Additionally, a degree of the adaption of the ignition timing may incorporate the deviation between evaluated combustion duration and preset combustion duration if derived or calculated, for example, at step 438 in analysis section 400. Stronger deviations may lead to stronger adaptations in desired ignition timing IGN.

In parallel or as an alternative to method step 442, control unit 76 may reduce a load of affected cylinder 9 of internal combustion engine 100 at step 444.

For example, at step 444, control unit 76 may reduce an opening duration of gaseous fuel admission valve 58 associated with affected cylinder 9 to reduce a fuel amount in respective combustion chamber 10. Again, adaption of the opening duration of gaseous fuel admission valve 58 may incorporate the deviation between derived actual combustion duration and preset combustion duration. As a result, a gaseous fuel amount supplied to affected cylinder 9 for a single combustion event may be reduced relative to a fuel amount which would be supplied under normal operating conditions.

Further, at step 446, control unit 76 may increase a load of remaining cylinders 9 not being associated with increased combustion velocities to compensate the load reduction performed at step 444. The load increase may be performed on a subgroup of remaining cylinders 9, the subgroup including one to all remaining cylinders 9. Moreover, the load increase may be uniformly shared between cylinders 9 of the subgroup. Due to the compensation, an overall engine load may be maintained.

At step 448, control unit 76 may adapt an overall air supply for the internal combustion engine 100. Specifically, the overall air supply may be calculated based on a load of a plurality of cylinders 9 not being associated with the increased combustion velocity. If simultaneously reducing a fuel amount supplied to affected cylinder 9 with increased combustion velocity, for example at step 444, affected cylinder 9 is supplied with a relatively great charge air amount being greater than required for combustion of the fuel supplied. The increased charge air amount may help to return the combustion process to normal combustion in subsequent combustion cycles.

Due to the closed loop design of analyzing section 400 transitioning into control section 440, and control section 440 looping back to analyzing section 400, operation of internal combustion engine 100 may be iteratively adapted to return the combustion process of affected cylinder 9 through subsequent combustion cycles to a combustion process with normal operation at normal combustion velocity.

Although the preferred embodiments of this invention have been described herein, improvements and modifications may be incorporated without departing from the scope of the following claims.

## Claims

1. A method for controlling a reciprocating internal combustion engine (100) operating at least partly on gaseous fuel, the method comprising:
receiving (step 402) a pressure data set of a combustion event, the pressure data set corresponding to a temporal development of a cylinder pressure during the combustion event;
determining (step 404) that the received pressure data set indicates an actual ignition timing within a preset ignition timing window;
deriving (step 420) an actual combustion duration (D1) of the combustion event from the received pressure data set;
determining (step 428) that the derived combustion duration (D1) of the combustion event is shorter than a preset combustion duration; and
providing (step 440) a control signal to adapt an operation of the internal combustion engine (100).

2. The method of claim 1, further comprising setting (step 432) the preset combustion duration based on a detected sequence of preceding combustion durations.

3. The method of claim 1 or 2, further comprising setting (step 434) the preset combustion duration based on a predefined characteristic map.

4. The method of any one of the preceding claims, wherein deriving (step 420) the actual combustion duration (D1) of the combustion event from the received pressure data comprises:
deriving (step 424) a temporal development of an accumulated combustion energy of the combustion event from the received pressure data set; and
associating (step 426) a section in the temporal development of the accumulated combustion energy of the combustion event with the combustion duration (D1).

5. The method of claim 4, wherein the section extends between a starting point (S1) and an end point (E1); and
the starting point (S1) is at a time corresponding to an accumulated combustion energy within a range between 5 % and 15 % of a maximum accumulated combustion energy, particularly 10 % of the maximum accumulated combustion energy; and/or
the end point (E1) is at a time corresponding to an accumulated combustion energy within a range between 80 % to 95 % of a maximum accumulated combustion energy, particularly 90 % of the maximum accumulated combustion energy.

6. The method of any one of the preceding claims, further comprising deriving (436) a deviation between the detected actual combustion duration (D1) and the preset combustion duration from the pressure data set.

7. The method of any one of the preceding claims, wherein providing (step 440) a control signal comprises:
reducing (step 444) a load of a cylinder (9) associated with the determination that an actual combustion duration (D1) is shorter than a preset combustion duration; and/or
delaying (step 442) a desired ignition timing (IGN) of a cylinder (9) associated with the determination (step 428) that an actual combustion duration is shorter than a preset combustion duration.

8. The method of claim 7, wherein reducing (step 444) the load of the cylinder (9) comprises reducing an opening duration of a gaseous fuel admission valve (58) of the cylinder (9).

9. The method of any one of claims 7 or 8, further comprising maintaining (step 446) an overall engine load by compensating the load reduction of the cylinder (9) associated with the determination (step 428) that an actual combustion duration (D1) is shorter than a preset combustion duration by increasing a load of a subgroup of remaining cylinders (9).

10. The method of any one of claims 7 to 9, wherein:
reducing (step 444) the load of the cylinder (9) is based on a deviation between the detected actual combustion duration (D1) and the preset combustion duration; and/or
delaying (step 442) the desired ignition timing (IGN) of the cylinder (9) based on a deviation between the detected actual combustion duration (D1) and the preset combustion duration.

11. The method of any one of the preceding claims, further comprising setting (step 448) an overall air supply for the internal combustion engine (100) based on a load of a plurality of cylinders (9) not being associated with the determination that an actual combustion duration is shorter than a preset combustion duration.

12. The method of any one of the preceding claims, wherein:
the preset ignition timing window starts on or after a desired ignition timing (IGN); and/or
providing (step 440) the control signal to adapt an operation of the internal combustion engine (100) is based on a deviation between the detected actual combustion duration (D1) and the preset combustion duration.

13. The method of any one of the preceding claims, further comprising determining (step 412) that the received pressure data set indicates a pressure fluctuation within a preset pressure fluctuation.

14. A control system for an internal combustion engine (100), the control system comprising:
a pressure sensor (77) configured to measure a temporal development of the cylinder pressure; and
a control unit (76) connected to the pressure sensor (77) and configured to perform the method according to any one of the preceding claims.

15. A reciprocating internal combustion engine (100) operating at least partly on gaseous fuel and comprising the control system of claim 14.
